# EUROPEAN PATENT SPECIFICATION

(11) **EP 3 937 635 B1**
(45) Date of publication and mention of the grant of the patent: **07.10.2026**
(21) Application number: 20771107.8
(22) Date of filing: 13.03.2020
(51) Int. Cl.: A01N 37/44, A01N 51/00, A01N 43/40, A01P 7/04

(54) **INSECTICIDAL COMBINATIONS**
INSEKTIZIDE WIRKSTOFFKOMBINATIONEN
COMBINAISONS INSECTICIDES

(30) Priority: 13.03.2019 IN 201931009832
(43) Date of publication of application: 19.01.2022
(73) Proprietor: UPL Ltd, Haldia, West Bengal 721 602 (IN)
(72) Inventor: SRIVASTAVA, Krishna, Ramprakash, Maharashtra, Mumbai 400051 (IN); UPPARA, Parasuveera, Maharashtra, Mumbai 400051 (IN); LOKHANDE, Pradnya, Sanjay, Maharashtra, Mumbai 400051 (IN); SAWANT, Govind, Gopal, Maharashtra, Mumbai 400051 (IN)
(74) Representative: J A Kemp LLP
(86) International application number: PCT/IB2020/052261
(87) International publication number: WO 2020/183425

(56) References cited:
- WO-A1-2017/202882
- WO-A2-2005/013687
- US-A1- 2006 008 493
- US-A1- 2007 071 784
- US-A1- 2007 071 785
- US-A1- 2008 089 857
- US-A1- 2010 291 022
- US-A1- 2013 053 421
- US-B2- 7 531 187
- SACKMANN, P ET AL.: "Effects of the bittering agent denatonium benzoate on the success of toxic baiting of pestiferous German wasps (Vespula german ica", INTERNATIONAL JOURNAL OF PEST MANAGEMENT, vol. 56, no. 1, 2010, pages 69 - 74, XP055721920, DOI: 10.1080/09670870903075022
- DATABASE GNPD 4 June 2013 (2013-06-04), BINKA: "Ultra Pum Total Extermination Flies Insecticide", XP055739328, retrieved from Mintel Database accession no. 2084740
- DATABASE GNPD 27 January 2011 (2011-01-27), INVENT: "Raptor Cockroach Traps", XP055739329, Database accession no. 1448709

## Description

### FIELD OF INVENTION

The present invention relates to an insecticidal combination. In particular, the present invention provides an insecticidal combination comprising an amount from 1 to 5% w/w of denatonium benzoate as aversive agent and an amount from 0.5 to 90% w/w of at least one insecticide selected from flonicamid, imidacloprid and thiamethoxam which is useful against harmful pests in plants. The present invention also provides method of controlling harmful pests in plants using said composition.

### BACKGROUND OF INVENTION

The protection of crops and its produce from insect pest damage is essential in agriculture produce enhancement. Chemical control by the use of various chemicals and formulations is an important tool in agriculture for the prevention and control of pests. Insecticides of many types and groups are reported in the literature and a large number are in use, commercially, for control of pests in agriculture.

Sucking pests have become quite serious from seedling stage, their heavy infestation at times reduces the crop yield to a great extent. The estimated loss due to sucking pests is up to 21.20% (Dhawan et al., 1988). Among the sap feeders leafhoppers commonly known as Jassids is one of the most abundant groups of plant feeding insects in the world.

Jassids (*Hemiptera: Cicadellidae*) are wedge shaped insects which walk diagonally and suck the cell sap from piercing type of mouth parts. While sucking the cell sap they inject toxins into the plant body which results yellowing and curling of leaves, dropping down of flowering and fruiting bodies. They secrete honey dew like sticky substance which create sooty mould on leaves and affect photosynthesis, growth and finally the yield of the crop. [*Reference:* Sathe, T. V., Nilam Shendage, and Chandni Kamble. "Biodiversity of Jassids from agroecosystems of Kolhapur district, India. " Int. Nat. J. Sci. Environ. and Tech 3.3 (2014): 1053-1058*.]*

Conventional insecticides have been recommended for the management of Jassids in plants.

The Insecticide Resistance Action Committee (IRAC) classifies the various insecticides according to their mode of action. [*Reference:* Sparks, Thomas C., and Ralf Nauen. "IRAC: Mode of action classification and insecticide resistance management." Pesticide biochemistry and physiology 121 (2015): 122-128*.*]

N-cyanomethyl-4-trifluoromethyl-3-pyridinecarboxyamide (common name: Flonicamid) is used as an active ingredient for a pesticide for controlling Jassids. Flonicamid is a chordotonal organ modulator in the insecticide resistance action committee (IRAC) group 29.

Nicotinic acetylcholine receptor (nAChR) competitive modulators are another class of insecticides classified in Group 4 by the IRAC group. The principle pest target for such insecticides is the sap-feeding insects. Crossthwaite et.al discloses the nicotinic acetylcholine receptor (nAChR) competitive modulators insecticides alongwith their mode of action. [*Reference:* Crossthwaite, Andrew J, et al. "The invertebrate pharmacology of insecticides acting at nicotinic acetylcholine receptors." Journal of Pesticide Science 42.3 (2017): 67-83*.]*

However, the present insecticides currently in use for controlling Jassids are not that effective; and, due to their prolonged indiscriminate and non-judicious use, Jassids have developed resistance to such commonly used insecticides. The use of insecticides for the prevention and control of Jassids is thereby becoming increasingly difficult. Therefore, there is an urgent need to develop new methods and formulations for controlling these harmful pests. Potent insecticidal compositions would be useful to manage insect pests for a desired higher crop yield and to control those insects which are hard to kill by existing commercial insecticides solely and in cyclic spray mixtures.

The use of Denatonium compounds, in particular, Denatonium Benzoate and Denatonium Saccharide, as aversive agents is known. See U.S. Pat. Nos. 3,080,327, 3,268,577, 4,661,504 and 4,652,577.

Denatonium benzoate, also known as phenylmethyl-[2-[(2,6-dimethylphenyl)amino]- 2-oxoethyl]-diethylammonium benzoate, CAS no. 3734-33-6. Formula: C₂₈H₃₄N₂O₃ molecular weight: 446.58 g/mol.

Denatonium benzoate is commercially sold as BITREX^{®}, available from Macfarlan Smith, Edinburgh, Scotland, UK. Bitrex is a quaternary ammonium salt formed by the combination of a cationic quaternary ammonium salt with an inert anion such as benzoate ion or saccharin anion. Having the following structure:

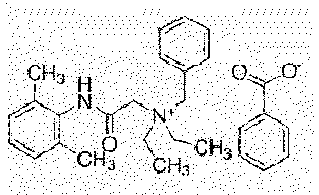

Denatonium benzoate is listed in the Guinness Book of Records and the Merck Index as "the bitterest substance known to man". Denatonium benzoate can be detected by the average person at 10 ppb and has a generally recognized bitter taste at 50 ppb (Anon.1989). The normal application range is 6-50 ppm, depending on the nature of the product to which it is added. Bitrex chemically resembles natural bitter substances such as quinine in having a molecular structure with separately charged elements that act on taste receptors. However, clinical trials have proven that its extremely human safe drug.

Denatonium benzoate is generally used as a bittering agent (or aversive agent) to prevent eating of toxic substances. For example, added to industrial alcohol, paint, toilet cleaners, liquid soaps, and shampoos in order to prevent poisoning in people, animals. Also, For example, it can be used in a dilute solution to brush on the fingernails of people who are compulsive fingernail-biters or on the thumbs of children who suck their thumbs more than they should. Denatonium benzoate is also used as an animal repellent such as cat, dog, and bird repellents, for prevention of cannibalism in pigs, to keep horses from chewing their stalls, deer from nibbling tree shoots, and to keep hedgehogs from eating slug pellets (Payne 1988).

US6399109B1 discloses a liquid insecticide solution comprising a 5% to 20% water solution of a disodium octaborate tetrahydrate ("DOT") as insecticide, colored pigment, and a bittering agent of either sucrose octa-acetate or Denatonium benzoate, is provided. This solution containing disodium octaborate tetrahydrate insecticide kills fungi that cause wood rot in addition to wood-destroying insects such as, e.g., termites, beetles, and carpenter ants.

WO94/22299A1 discloses solid insecticidal composition comprising a mixture of two insecticidally active ingredients in association with an insect-attractive bait substance characterized in that the first insecticidally active ingredients is an insect growth regulator active against larval stages of an insect and the second insecticidally active ingredient is a direct toxicant having knowk down and lethal effects in adult stages of the insect, the insect-attracting bait substance being attractive to both adult and larval stages of the insect, wherein the first insecticidally active ingredient is pyriproxyfen and the second insecticidally active ingredient is a pyrethroid or an organo-phosphorus compound.

US 2008/089857 describes baits for controlling flies (fly gels) comprising a) one or more neonicotinoids, b) one or more gelling agents, c) one or more attractants, and having a gel point between having a Brookfield yield value between 150 and 1000 and a Brookfield viscosity between 40,000 and 150,000 mPas, to a process for the preparation of such fly gels, its use and methods for controlling flies.

WO 2005/013687 describes a ready-to-use granule bait composition, its preparation and use for the control of house flies inside houses and animal stalls, fodder stores and sanitary installations.

US 2006/008493 describes a synergistic insecticidal composition prepared by combining a Chloronicotynyle compound and an Organophosphorus (OP) compound. The preferred synergistically effective amount of the Chloronicotynyle compounds is an amount preferably ranging from 0.1 to 5% by weight of the composition. The preferred synergistically effective amount of the Organophosphorus (OP) compounds is an amount preferably ranging from 30 to 75% by weight of the composition. The composition also preferably includes 69.9 to 20% by weight of conventional agriculturally acceptable carrier(s) and/or excipient.

Therefore, there is a long felt need to develop novel and effective insecticidal combinations for controlling the harmful pests in plants and demonstrating a high efficacy, high selectivity, environmentally safe and can be advantageously formulated. Till date there is no report of employing aversive agents such as Denatonium benzoate in insecticidal combinations for enhancing the efficacy of the insecticidal formulation to control harmful pest. The present inventors have surprisingly developed an effective insecticidal combination which ameliorates the aforesaid shortcomings of the prior art.

### OBJECTS OF THE INVENTION

It is an object of the present invention to provide a novel and effective insecticidal combination demonstrating a high efficacy and a high selectivity.

It is another object of the present invention to provide a novel and effective insecticidal combination for controlling the harmful pests in plants.

It is another object of the present invention to provide a novel and effective insecticidal combination which can be easily formulated.

It is another object of the present invention to provide a novel and effective insecticidal combination which is environmentally safe.

It is another object of the present invention to provide a method for controlling pests in plants.

### SUMMARY OF THE INVENTION

It is an aspect of the present invention to provide an insecticidal combination comprising:
i) an amount from 1 to 5% w/w of denatonium benzoate as aversive agent and
ii) an amount from 0.5 to 90% w/w of at least one insecticide selected from flonicamid, imidacloprid and thiamethoxam.

It is another aspect of the present invention to provide an insecticidal composition comprising:
i) an amount from 1 to 5% w/w of denatonium benzoate as aversive agent; and
ii) an amount from 0.5 to 90% w/w of at least one insecticide selected from flonicamid, imidacloprid and thiamethoxam; and further comprising
iii) an agrochemically acceptable excipient.

It is another aspect of the present invention to provide a method for controlling pests in plants, said method comprising applying to the locus of the insect pest infestation, an insecticidal combination comprising:
i) an amount from 1 to 5% w/w of denatonium benzoate as aversive agent and
ii) an amount from 0.5 to 90% w/w of at least one insecticide selected from flonicamid, imidacloprid and thiamethoxam.

### BRIEF DESCRIPTION OF THE DRAWINGS

The above and other aspects, features and advantages of certain exemplary embodiments of the present invention will be more apparent from the following description taken in conjunction with the accompanying drawings wherein:

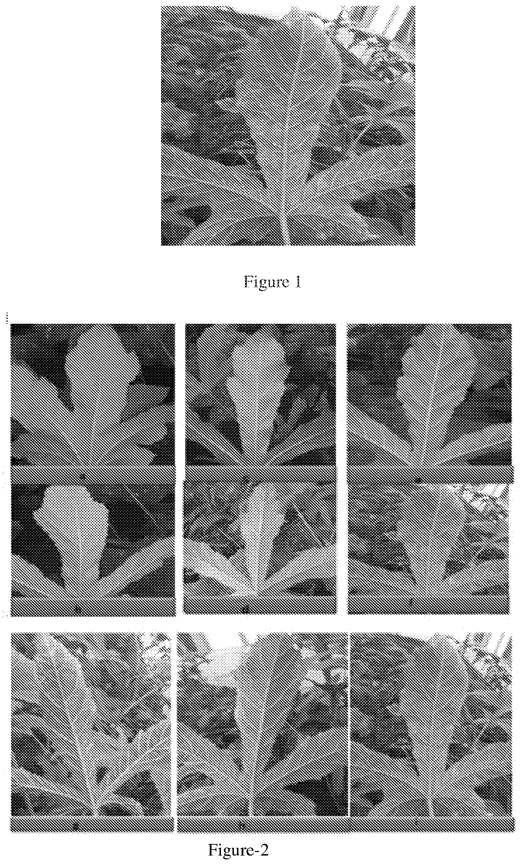

**Figure 1****:** Photographic image of damaged leaf of Okra infected by Jassids
**Figure 2****:** Photographic images of treatment effects with combinations of the present invention on Okra:
   (a) T-1 Denatonium Benzoate + Ulala @ 5 + 0.4 ml
   (b) T-4 Ulala @ 0.4 g/lit water
   (c) T-2 Denatonium Benzoate + Thiamethoxam @ 5 + 0.5 ml
   (d) T-5 Thiamethoxam @ 0.4 g
   (e) T-3 Denatonium Benzoate + Imidacloprid. @ 5 + 0.5 ml
   (f) T-9 Untreated control
   (g) T-7 Denatonium Benzoate @ 4 ml/lit of water
   (h) T-8 Denatonium Benzoate @ 5 ml/lit of water
   (i) T-9- Untreated Control

### DETAILED DESCRIPTION OF THE INVENTION

It is to be understood that the singular forms "a," "an," and "the" include plural referents unless the context clearly dictates otherwise.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, steps or components but does not preclude the presence or addition of one or more other features, steps, components or groups thereof.

The term *'plants'* as used herein, refers to all physical parts of a plant, including seeds, seedlings, saplings, roots, tubers, stems, stalks, foliage and fruits.

The term *"insects"* as used herein, includes all organisms in the class "Insecta."

The term *"Jassids"* as used herein refers to sucking pests, leafhoppers from the family *Cicadellidae (Jassidae*).

The term *"Insecticidal"* as used herein, refers to the ability of a pesticide to increase mortality or inhibit growth rate of insects.

The term *"locus"* as used herein, refers to the part to which a combination according to the invention is applied. It includes application to an individual plant, a group of plants such as a plant and/or its surrounding, and the region in which plants may be planted as well application directly to an insect or insects and/or the vicinity in which they are located.

The term *"agriculturally acceptable amount of active"* refers to an amount of an active that kills or inhibits the plant disease for which control is desired, in an amount not significantly toxic to the plant being treated.

The term "% by weight" (percent by weight) as used herein, unless otherwise defined, relates to the relative weight of the respective component based on the total weight of the formulation.

To *"control"* or *"controlling"* insects means to inhibit, through a toxic effect, the ability of insect pests to survive, grow, feed, and/or reproduce, or to limit insect-related damage or loss in crop plants. To "control" insects may or may not mean killing the insects, although it preferably means killing the insects.

The term *"aversive agents"* as used herein refers to the class of compounds which cause rejection of a material by presenting unpleasant gustatory cues such as flavors, textures, or other taste (and sometimes associative odor) characteristics. There are two primary classes of aversive agents: bitterants, chemicals producing a bitter flavor, and pungent agents, chemicals producing an unpleasantly pungent flavor.

The term *"chordotonal organ modulator"* as used herein, refers to the class of insecticides classified by the insecticide resistance action committee (IRAC) group 29 which disrupts the chordotonal organs (i.e. stretch receptors) of the insects thereby interfering with movement, hearing and balance, causing the insect to stop feeding.

The term *"Nicotinic acetylcholine receptor (nAChR) competitive modulators"* as used herein refers to another class of insecticides classified in Group 4 by the IRAC group. The nicotinic acetylcholine receptor (nAChR) is a ligand-gated ion channel composed of 5 protein subunits arranged around a central cation selective pore. Insecticides mediate their effect through interacting at nAChRs.

The present invention relates to a novel and effective insecticidal combination comprising:
i) an amount from 1 to 5% w/w of denatonium benzoate as aversive agent and
ii) an amount from 0.5 to 90% w/w of at least one insecticide selected from flonicamid, imidacloprid and thiamethoxam.

In an embodiment, the composition comprises denatonium benzoate as aversive agent, the denatonium benzoate is present in the composition at a concentration in the range of about 1 to 5 % w/v which include 1%, 2%, 3%, 4% and 5% w/v.

The aversive agent is used in an amount of about 1 to 5% w/w of total weight of the composition.

The aversive agent is Denatonium benzoate.

The total amount of the insecticide is used in an amount in the range of 0.5 to 90% by weight.

In an embodiment, the chordotonal organ modulator insecticide is Flonicamid.

In an embodiment, flonicamid used is flonicamid 50% wet granular (WG) and can be used in an amount of 150 to 200 g/ha.

In an embodiment of the present invention, an agrochemical composition comprises neonicotinoid insecticide selected from imidacloprid, thiamethoxam or combinations thereof.

In an embodiment of the present invention, neonicotinoid insecticide is imidacloprid.

In an embodiment, neonicotinoid insecticide is Imidacloprid 17.8 % SL and can be used in an amount of 100 to 125 ml/ha.

In an embodiment the neonicotinoid insecticide is thiamethoxam.

In an embodiment, thiamethoxam used is Thiamethoxam 25 % WG and can be used in an amount of 100 g/ha.

According to present invention the present invention provides an insecticidal combination comprising aversive agent and at least one insecticide.

The present composition comprises denatonium benzoate as aversive agent.

The present composition comprising a combination of aversive agent and at least one insecticide and agrochemically acceptable excipient.

The aversive agent is used in an amount in the range of 1 to 5% w/w.

The insecticide is used in an amount in the range of 0.5 to 90% w/w.

The present composition comprises denatonium benzoate and at least one insecticide selected from flonicamid, imidacloprid or thiamethoxam.

In an embodiment, the insecticidal combination comprises Denatonium benzoate and Flonicamid.

In another embodiment, the insecticidal combination comprises Denatonium benzoate and Thiamethoxam.

In an embodiment, the insecticidal combination comprises Denatonium benzoate and Imidacloprid.

The combinations of the present invention may be formulated in the form of a composition.

In another embodiment the compositions described herein comprising agrochemically acceptable excipients.

According to an embodiment, at least one agrochemically acceptable excipient comprises wetting agents, dispersing agents, emulsifiers, binding agents, sticking agents, fillers, diluents, solvents, coating agents, stabilizers, chelating agents and coloring agents and buffering agent. However, those skilled in the art will appreciate that it is possible to utilize additional agrochemically acceptable excipients without departing from the scope of the present invention. The agrochemically acceptable excipient can be in the range from 0.1% to 99% of the total weight of the composition.

The amount of a composition according to the invention to be applied, will depend on various factors, such as the subject of the treatment, such as, for example plants, soil or seeds; the type of treatment, such as, for example spraying, dusting or seed dressing; the purpose of the treatment, such as, for example prophylactic or therapeutic disease control; in case of disease control the type of fungi to be controlled or the application time. This amount of the combinations of the present invention to be applied can be readily deduced by a skilled agronomist.

In an embodiment the combination of the present invention maybe formulated as liquid solution.

In an embodiment the combination of the present invention maybe a suspension formulation.

The combination of the present invention maybe formulated in a manner which suits the specific application. The formulation may be solid or liquid formulations. Non-limiting examples of suitable liquid formulations may be emulsion concentrates (EC), suspension concentrates (SC), capsule suspensions (CS); suitable solid formulations may be water dispersible granules (WDG) and wettable powders (WP), dusts and the like.

Adjuvants and ancillary ingredients may be used to formulate such pre-formulated compositions and may employ wetting agents, adhesives, dispersants, penetrants, rain-fastening agents or surfactants and, if appropriate, solvent or oil and other agriculturally acceptable additives and adjuvants.

According to an embodiment of the present invention, a process for the preparation of agrochemical composition comprising a combination of aversive agent and at least one insecticide comprising dissolving mixing active ingredients in to an aqueous solution containing agrochemically acceptable carriers under stirring to form a clear/ hazy solution. This solution was stirred continuously till it forms a uniform dispersed. The composition may further comprise at least one selected from anionic surfactant(s), antifreezing agent(s), wetting agent(s), antifoaming agent(s), thickening agents, preservatives, plant health promoting agent and optionally other auxiliary ingredients; and packaging the resulting agrochemical composition.

In an embodiment, the combination of the present invention is preferably effective against the harmful sucking pest.

In another aspect the present invention provides a method for controlling harmful pests in plants, said method comprising applying to the locus of the insect pest infestation, an insecticidal combination comprising an aversive agent and at least one insecticide.

In an embodiment, the present invention provides a method of controlling harmful pests in plants, comprising applying to a locus of the insect pest infestation, an insecticidal combination comprising denatonium compound as aversive agent and at least one insecticide.

According to a still further embodiment, the invention further relates to a method of application of the present agricultural composition comprising said combination of aversive agent and at least one insecticide to crops and plants.

Advantageously, the composition is highly safe to the user and to the environment.

The composition of this invention is effective against a wide spectrum of foliar-feeding, fruit-feeding, stem or root feeding, seed-feeding, aquatic and soil-inhabiting arthropods (term "Arthropods" includes insects, mites and nematodes) which are pests of growing and stored agronomic crops, forestry, greenhouse crops, ornamentals, nursery crops, stored food and fiber products, livestock, household, and public and animal health. Those skilled in the art will appreciate that the composition of the present invention is effective against all growth stages of all pests preferably all sucking pest. Nevertheless, the composition of present invention is effective against pests that include: eggs, larvae and adults of the Order Lepidoptera; eggs, foliar-feeding, fruit-feeding, root-feeding, seed-feeding larvae and adults of the Order Coleoptera; eggs, immatures and adults of the Orders Hemiptera and Homoptera; eggs, larvae, nymphs and adults of the Order Acari; eggs, immatures and adults of the Orders Thysanoptera, Orthoptera and Dermaptera; eggs, immatures and adults of the Order Diptera; and eggs, juveniles and adults of the Phylum Nematoda. The compositions of invention are also effective against pests of the Orders Hymenoptera, Isoptera, Siphonaptera, Blattaria, Thysanura and Psocoptera; pests belonging to the Class Arachnida and Phylum Platyhelminthes; southern corn rootworm (*Diabrotica undecimpunctata howardi*), aster leafhopper (*Mascrosteles fascifrons*), boll weevil (*Anthonomus grandis*), two-spotted spider mite (*Tetranychus urticae*), fall armyworm (*Spodoptera frugiperda*), black bean aphid (*Aphis fabae*), green peach aphid (*Myzus persica*)*,* cotton aphid (*Aphis gossypii*), Russian wheat aphid (*Diuraphis noxia*), English grain aphid (*Sitobion avenae*), whitefly (*Bemisia tabacii*), tobacco budworm (*Heliothis virescens*), rice water weevil (*Lissorhoptrus oryzophilus*), rice leaf beetle (*Oulema oryzae*), whitebacked planthopper (*Sogatella furcifera*), green leafhopper (*Nephotettix cincticeps*), brown planthopper (*Nilaparvata lugens*), small brown planthopper (*Laodelphax striatellus*), rice stem borer (*Chilo suppressalis*), rice leafroller (*Cnaphalocrocis medinalis*), black rice stink bug (*Scotinophara lurida*), rice stink bug (*Oebalus pugnax*)*,* rice bug (*Leptocorisa chinensis*), slender rice bug (*Cletus puntiger*), southern green stink bug (*Nezara viridula*) and german cockroach (*Blatella germanica*); on mites, demonstrating ovicidal, larvicidal and chemosterilant activity against such families as Tetranychidae including *Tetranychus urticae, Tetranychus cinnabarinus, Tetranychus mcdanieli, Tetranychus pacificus, Tetranychus turkestani, Byrobia rubrioculus, Panonychus ulmi, Panonychus citri, Eotetranychus carpini borealis, Eotetranychus, hicoriae, Eotetranychus sexmaculatus, Eotetranychus yumensis, Eotetranychus banksi and Oligonychus pratensis;* Tenuipalpidae including *Brevipalpus lewisi, Brevipalpus phoenicis, Brevipalpus californicus* and *Brevipalpus obovatus;* Eriophyidae including *Phyllocoptruta oleivora, Eriophyes sheldoni, Aculus cornutus, Epitrimerus pyri* and *Eriophyes mangiferae.*

In one embodiment, the combination of the present invention is preferably effective against Jassids.

In an embodiment, the Jassid species is selected from *Amrasca bigutula bigutula., Adelungiinae; Agalliinae, Aphrodinae, Arrugadinae, Austroagalloidinae Bythoniinae, Cicadellinae, Bothrogonia, Graphocephala* (including *coccinea*), *Homalodisca Zyzzogeton, Coelidiinae, Deltocephalinae, Anoplotettix* (Ferrari, 1882), *Circulifer, Graminella, Hecalusina* (He, Zhang & Webb, 2008), *Nephotettix, Stirellus, Drakensbergeninae, Errhomeninae Euacanthellinae, Eupelicinae, Eurymelinae, Eurymela, Eurymeloides, Evacanthinae, Evansiolinae, Hylicinae, Iassinae, Idiocerinae, Idiocerus, Koebeliinae, Ledrinae, Ledra Neotituria, Macropsinae, Oncopsis, Makilingiinae, Megophthalminae, Mileewinae Mukariinae, Neobalinae, Neocoelidiinae, Nioniinae, Nirvaninae, Nirvana, Sophonia Penthimiinae, Phereurhininae, Phlogisinae, Scarinae, Selenocephalinae, Signoretiinae Stegelytrinae, Tartessinae, Tinterominae, Typhlocybinae, Dziwneono, Empoasca, Erasmoneura* (Young, 1952), *Eupteryx, Sweta, Typhlocyba, Ulopinae, Xestocephalinae, Incertae sedis, Mesojassoides* (extinct, late Cretaceous).

In an embodiment, the plants are selected from but not limited to cereals, such as wheat, oats, barley, spelt, triticale, rye, maize, millet, rice, crops such as sugarcane, soybean, sunflower, rape, canola, tobacco, sugar beet, fodder beet; tuber crops such as potatoes, sweet potatoes etc., crops such as asparagus, hops etc.,; fruit plants such as apples, pears, stone-fruits such as for example peaches, nectarines, cherries, plums, apricots, citrus fruits such as oranges, grapefruit, limes, lemons, kumquats, mandarins, satsumas; nuts such as pistachios, almonds, walnuts, pecan nuts, tropical fruits such as mango, papaya, pineapple, dates, bananas etc., grapes, vegetables such as endives, lambs, lettuce, fennel, globe and loose-leaf salad, chard, spinach, chicory, cauliflower, broccoli, Chinese cabbage, kale (winter kale or curly kale), kohlrabi, Brussel sprouts, red cabbage, white cabbage and savoy, fruiting vegetables such as aubergines, cucumbers, paprika, marrow, tomatoes, courgettes, sweetcorn, root vegetables such as celeriac, turnip, carrots, swedes, radishes, horse radish, beetroot, salsify, celery, pulses such as peas, beans etc., bulb vegetables such as leeks, onions etc., oil crops such as mustard, poppy, olives, sunflowers, coconut, castor oil plants, cocoa beans, groundnuts; fibre crops such as cotton, jute, flex, hemp, crops such as tea, coffee, rubber, ornamentals including shrubs and flowering plants, vines, rangeland and pastures.

In an embodiment, the method of the present invention is carried out by applying the combination of aversive agent and at least one insecticide at the locus of the infestation.

Preferably, treating the locus with the combination of the present invention comprises administering to the soil, applying to the plant or parts of the plant or seed with an effective amount of aversive agent and insecticide. The administration is preferably by application either when first signs of infestation are seen or when insect pests begin to reappear.

The combination of aversive agent and insecticides can be obtained from separate formulation sources and mixed together and used as a tank-mix, ready-to-apply, spray broth, or slurry, optionally with other pesticides, or the said combination may be obtained as a single formulation mixture such as a pre-mix, concentrate or formulated product and optionally mixed together with other insecticides, attractants, sterilants, bactericides, acaracides, nematicides, fungicides, growth regulators, herbicides, fertilizers and mixtures thereof.

### EXAMPLES:

The following examples are meant to illustrate the present invention. The examples are presented to exemplify the invention and are not to be considered as limiting the scope of the invention.

**Example 1**

| Ingredients | Amount in % w/w |
|---|---|
| Denatonium Benzoate | 5 |
| Thiamethoxam | 0.5 |
| Sodium Lignosulfonate | 2 |
| Polyvinyl Pyridine | 0.5 |
| Water | Q.S. |

Process:
Above mentioned quantity of polyvinyl Pyridine and Sodium Lignosulfonate were dissolved in water under stirring. Slowly weighed quantity of Denatonium Benzoate and Sodium Lignosulfonate were added to the same mixture under stirring to form a clear/ hazy solution. This solution was stirred continuously till it forms a uniform dispersed.

### Example 2

| Ingredients | Quantity in % w/w |
|---|---|
| Denatonium Benzoate | 5 |
| Thiamethoxam | 0.5 |
| alkyl-ether sulfates | 3 |
| Polyvinyl Pyridine | 0.2 |
| Water | Q.S. |

Process:
Above mentioned quantity of polyvinyl Pyridine and alkyl-ether sulfate were dissolved in water under stirring. Slowly weighed quantity of Denatonium Benzoate and alkyl-ether sulfate were added to the same mixture under stirring to form a clear/ hazy solution. This solution was stirred continuously till it forms a uniform dispersed.

### Example 3

| Ingredients | Quantity in % w/w |
|---|---|
| Denatonium Benzoate | 5 |
| Flonicamid | 0.5 |
| Benzalkonium chloride | 4 |
| Polyvinyl Pyridine | 0.4 |
| Water | Q.S. |

Process:
Above mentioned quantity of polyvinyl Pyridine and Benzalkaonium chloride were dissolved in water under stirring. Slowly weighed quantity of Denatonium Benzoate and Benzalkaonium chloride were added to the same mixture under stirring to form a clear/ hazy solution. This solution was stirred continuously till it forms a uniform dispersed.

### Field trial data:

### Example 4

Field trials were conducted to study the effect of the combination of Denatonium benzoate with insecticides. The following three combinations were tested on the control of Jassids species *Amrasca bigutula bigutula* in the crop of infected Okra (*Abelmoschus esculentum L*) over the use of insecticides alone.
- Denatonium benzoate + Flonicamid
- Denatonium benzoate + Thiamethoxam
- Denatonium benzoate + Imidacloprid

Both phytotoxicity and percentage control of the Jassids was measured. Experimental design of the field trial is given in Table-1 below:

**Table-1**

| **Sr. No** | **Details** | **Information** |
|---|---|---|
| 1 | Experimental Design | RBD |
| 2 | Treatments & Replications: | 9 X2 |
| 3 | Plot Size | 1.5 x 2 m2 |
| 5 | Crop & Variety | Okra- Sahiba |
| 6 | Soil Type | Black Soil |
| 7 | Irrigation | Drip |
| 8 | Spray Equipment | Back pack Knapsack (Electrical) Sprayer |
| 9 | Nozzle | Hollow cone |
| 10 | Water Volume | 500 l/ha |
| 11 | Application Time | @ ETL- 2 Jassids per leaf |

Treatment details for the field trial is given in Table-2 below:

**Table-2**

| **Treatment No.** | **Treatments (T)** | **Dosage of chemicals (g or ml/ lit of water)** |
|---|---|---|
| T-1 | DB Liquid + Ulala (Flonicamid 50 % WG) | 5 + 0.4 |
| T-2 | DB Liquid+ Thiamethoxam | 5 + 0.5 |
| T-3 | DB Liquid+ Imidacloprid | 5 + 0.5 |
| T-4 | Ulala (Flonicamid 50 % WG) | 0.4 |
| T-5 | Thiamethoxam | 0.5 |
| T-6 | Imidacloprid | 0.5 |
| T-7 | DB Liquid | 4 |
| T-8 | DB Liquid | 5 |
| T-9 | Control | -- |

T-1, T-2 and T-3 are the treatment with insecticidal combinations according to the present invention; T-4, T-5 and T-6 are the treatment with insecticides alone; T-7 and T-8 are the treatment with Denatonium benzoate (DB) liquid solutions alone and T-9 is the control.

### Phytotoxicity Test Results:

The safety of Denatonium Benzoate (DB) combinations according to present invention on Okra was evaluated. It is observed that the DB combinations according to the present invention are safe and no Phytotoxicity is observed. None of the chemical treatments showed any adverse phytotoxicity symptoms on the plants.

### Control of Jassids by the insecticidal combinations of present invention:

Bio-efficacy of insecticidal combinations of the present invention against Jassids in infected Okra were evaluated. The percentage control of Jassids was measured. Efficacy was evaluated as: *Excellent 91-100%, Very good 81-90%, Good 71-80%, Moderate 51-70%, Poor <50%.*

Table-3 illustrates the efficacy results of the combination of present invention.

**Table-3**

| **T.N** | **TREATMENT** | **DOSE** | **Target** | ***Amrasca bigutula bigutula*** | | | | | |
|---|---|---|---|---|---|---|---|---|---|
| | | | Result | % CONTROL | | | | | |
| | | g /ha | A00 | A01 | A03 | A07 | B01 | B03 | B07 |
| T-1 | DB Liquid +Ulala (Flonicamid 50 % WG) | 5 + 0.4 | 5.90 | 81.0 | 92.24 | 94.63 | 93.29 | 93.37 | 95.50 |
| T-2 | DB Liquid+ Thiamethoxam | 5 + 0.5 | 7.60 | 72.55 | 85.34 | 84.56 | 78.05 | 83.43 | 86.49 |
| T-3 | DB Liquid +Imidacloprid | 5 + 0.5 | 7.20 | 73.53 | 77.59 | 73.83 | 76.83 | 77.35 | 79.73 |
| T-4 | Flonicamid 50 % WG (Ulala) | 0.4 | 6.10 | 78.43 | 90.52 | 91.95 | 91.46 | 92.27 | 93.69 |
| T-5 | Thiamethoxam 25 % WG | 0.5 | 6.80 | 70.59 | 83.62 | 81.88 | 77.44 | 80.66 | 80.63 |
| T-6 | Imidacloprid 17.8 % SL | 0.5 | 7.20 | 69.61 | 75.00 | 73.83 | 76.22 | 74.03 | 73.42 |
| T-7 | DB Liquid | 4 | 7.70 | 5.88 | 8.62 | 4.03 | 7.32 | 7.18 | 5.41 |
| T-8 | DB Liquid | 5 | 8.90 | 8.82 | 10.34 | 9.40 | 10.98 | 10.50 | 10.81 |
| T-9 | Control | -- | 9.50 | [10.2* ] | [11.6] | [14.9] | [16.4] | [18.1] | [22.2] |

| | | | | | | | | | |
|---|---|---|---|---|---|---|---|---|---|
| ** No. of Jassids per 3 leaf* | | | | | | | | | |

### Observations:

✔ Selectivity: Good crop safety was observed in both the application rates of Denatonium Benzoate i.e. 4 ml & 5 ml/lit of water on okra.
✔ Efficacy:
   - *Amrasca bigutula bigutula: Jassids*
   - The performance of T-7 DB @ 4 ml/ lit of water & T-8 DB@ 5 ml/lit of water are found poor in controlling Okra Jassids.
   - Treatment T-1 DB + Ulala @ 5 + 0.4 g/lit of water gives excellent control of Okra Jassids and next best treatments are T-2 DB + Thiamethoxam @ 5 + 0.5 g/lit of water & T-3 DB+ Imidacloprid @ 5+ 0.4 ml/lit of water.

From the aforesaid, it is observed that all the chemical treatments with the Denatonium Benzoate insecticidal combinations of the present invention were able to effectively reduce the Jassid population and were significantly superior to use of insecticide alone. The combinations were better in reducing the infestation of Jassids as compared to their stand alone treatments. The combination displayed promising bio-efficacy results in comparison to stand alone treatments.

It is found that the present combinations are more effective in killing Jassids (sucking pests) over using insecticides alone.

## Claims

1. An insecticidal combination comprising an amount from 1 to 5% w/w of denatonium benzoate as aversive agent and an amount from 0.5 to 90% w/w of at least one insecticide selected from flonicamid, imidacloprid and thiamethoxam.

2. A composition comprising the insecticidal combination as claimed in claim 1, and further comprising an agrochemically acceptable excipient.

3. A method of controlling harmful pests in plants, comprising applying to a locus of the insect pest infestation, an insecticidal combination as claimed in claim 1.

## Patentansprüche

1. Insektizide Kombination, umfassend eine Menge von 1 bis 5 Gew./Gew. Denatoniumbenzoat als Abwehrmittel und eine Menge von 0,5 bis 90 Gew./Gew. wenigstens eines Insektizids, ausgewählt aus Flonicamid, Imidacloprid und Thiamethoxam.

2. Zusammensetzung, die die insektizide Kombination nach Anspruch 1 umfasst und ferner einen agrochemisch unbedenklichen Trägerstoff umfasst.

3. Verfahren zum Bekämpfen von schädlichen Schädlingen an Pflanzen, umfassend das Aufbringen einer insektiziden Kombination nach Anspruch 1 auf eine Stelle des Insektenschädlingsbefalls.

## Revendications

1. Combinaison insecticide, comprenant une quantité de 1 à 5 % p/p de benzoate de dénatonium en tant qu'agent répulsif et une quantité de 0,5 à 90 % p/p d'au moins un insecticide sélectionné parmi flonicamide, imidaclopride, et thiaméthoxame.

2. Composition, comprenant la combinaison insecticide telle que revendiquée dans la revendication 1, et comprenant en outre un excipient agrochimiquement acceptable.

3. Procédé de contrôle de ravageurs nocifs dans des végétaux, comprenant l'application, à un lieu d'infestation d'insectes ravageurs, d'une combinaison insecticide telle que revendiquée dans la revendication 1.
